(19) Europäisches Patentamt
European Patent Office
Office européen des brevets

(11) Publication number : **0 411 583 B1**

(12) # EUROPEAN PATENT SPECIFICATION

(45) Date of publication of patent specification : **16.06.93 Bulletin 93/24**

(51) Int. Cl.$^5$ : **C04B 28/10**

(21) Application number : **90114709.0**

(22) Date of filing : **31.07.90**

(54) **Autogenously air-setting mortar.**

(30) Priority : **01.08.89 IT 2141189**

(43) Date of publication of application : **06.02.91 Bulletin 91/06**

(45) Publication of the grant of the patent : **16.06.93 Bulletin 93/24**

(84) Designated Contracting States : **AT BE CH DE DK ES FR GB GR LI NL SE**

(56) References cited :
**AT-B- 121 440**
**DE-B- 1 197 369**

(73) Proprietor : **SYREMONT S.p.A.**
**31 Foro Buonaparte**
**I-20121 Milan (IT)**

(72) Inventor : **Ferroni, Enzo, Dr.**
**11, P.zza Fardella di Torrearsa**
**I-50137 Firenze (IT)**
Inventor : **Baglioni, Piero, Dr.**
**192/A, Via Mimmole**
**I-50010 Caldine, Firenze (IT)**

(74) Representative : **Weinhold, Peter, Dr. et al**
**Patentanwälte Dipl.-Ing. G. Dannenberg Dr. P. Weinhold Dr. D. Gudel Dipl.-Ing. S. Schubert Dr. P. Barz Siegfriedstrasse 8**
**W-8000 München 40 (DE)**

**EP 0 411 583 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to novel autogenously air-setting mortars.

In particular, the present invention relates to mortars of the air-hardening type, in which the development of the carbon dioxide required for the setting (carbonation) takes place autonomously.

More specifically, the present invention relates to ordinary (air-setting) mortars in the formulations of which, besides hydrated lime, a special additive is contained, which is capable of developing in situ, under application conditions, the amount of carbon dioxide which is at least partially necessary to promote the reaction of the hydrated lime of the mortar, which reaction constitutes the basis for the "setting" of ordinary air-mortars (autogenous setting).

It is well-known that the structural materials in the field of building (stone, bricks, inorganic inert, loose materials, such as limestone, siliceous materials, etc.) are "bound" to each other according to a prearranged compact and coherent structure by means of the use of binders.

The term "binder" as used herein denotes a material which, when inserted, in the fluid or plastic state, between the loose components of the building structure (stones, bricks) gives rise, under the use conditions, to a "setting" phenomenon, i.e., the binder is transformed from a more or less fluid and flowing and/ or plastic state, into a compact mass adhering to said loose material portions, binding them to one another so as to yield a firmly coherent whole.

Said "setting" is the result of a complex reaction of the components of the mortar with carbon dioxide contained in the atmospheric air (air-setting mortars) or, in the absence of air, with water (hydraulic mortars, hydraulic cements and the like), depending on the formulation of the components which constitute the binder.

It is well-known that ordinary mortars are normally employed not only as binders for loose inert materials, but also for preparing plasters.

The term "air-setting mortar", as explained above, derives from the setting process, i.e., a sequence of reactions taking place in the presence of atmospheric air between hydrated lime [$Ca(OH)_2$], which is the main active component of ordinary mortar, and carbon dioxide, contained in the atmospheric air, with the formation of calcium carbonate and water.

The heterogeneous reactions which take place between the components are slow, in that they are subject to the influence of a plurality of factors, e.g., the permeability of the mortar to carbon dioxide, the growth of the new phase ($CaCO_3$), water diffusion, etc. The nucleation and the growth of the new phase ($CaCO_3$) give rise to a texture of crystals, which endows the mass with the desired cohesion properties.

Therefore, the use of ordinary mortars strictly depends on the presence of carbon dioxide in the surrounding environment, and on the access of carbon dioxide to those sites where mortar [i.e., $Ca(OH)_2$] is present, in order to react therewith.

Unfortunately, such an access is not always possible and/or sufficiently accomplished under the operating conditions.

On the other hand, the use of binders which do not require carbon dioxide for setting (cements, gypsum), is not always possible and/or compatible with the already present substrates, owing to their different chemical and physical characteristics or, in case of interventions of restoration, maintenance, etc.

An example which is particularly illustrative of this situation of technological impasse is the restoration of frescoes.

As it is known, a fresco requires a strict operative methodology, which necessitates a well-defined sequence of operations. A plaster made on the wall structure with "lean" mortar, i.e., with a mortar with a relatively high content of sand composed of medium-size particles, constitutes the "arriccio", so called in that its surface is intentionally curled, in order to increase the surface area thereof and, consequently, to favour a more efficient adhesion to the layer subsequently to be applied thereon.

On the "arriccio" layer, a thin layer of malt with a higher concentration of hydrated lime and smaller sized sand is then applied. The extension of this layer is predetermined by the artist according to the duration of his action (i.e., to the duration of his workday), in that the fresco has to be painted on "fresh" malt. Considerable shrinking due to the initial drying of the malt does not take place, in that the layer on which the artist works (e.i., the pictorial layer) is of low thickness, as compared to the thickness of the underlying "arriccio" layer which has a higher porosity.

The pigments, in the form of fine suspensions, are then deposited on the surface of the pictorial layer, and the incipient carbonation causes the nucleation and crystal growth which block the pigment granules, setting them within the crystal texture.

The pictorial layer constitutes the interface layer between the surrounding environment and the frescoed wall structure. Therefore, it is in said pictorial layer where, e.g., the evaporation and condensation takes place, in relation to the humidity gradients existing between the system and the surrounding environment.

The often heterogeneous wall structure, the arriccio and the thin pictorial layer show different physical properties.

Therefore, due to the effect of mechanical stresses, or also due to differences in porosity encountered by the lifting solutions caused by the capillarity of the materials, at the interfaces between the wall structure and the arriccio, or between the arriccio layer and the pictorial layer, detachment of layer portions of more or less extended surface area can occur. Said detachment is one of the most frequent causes of decay of frescoes. When it involves large surface areas and is pronounced, said detachment becomes clearly visible.

The most frequent intervention, improperly referred to as "of restoration", consists in injecting adhesive agents or, more generally, binders, into the inner portions of the areas of interest. The absence of a direct contact with the atmosphere (and, therefore, with carbon dioxide) heretofore has favoured the use of hydraulic binders (cement; gypsum) for said purpose.

However, the presence of a region constituted by a more or less extended hardened mass of cement causes a local change in the physical properties of the whole structure by changing the kinetic processes which take place owing to the occurrence of gradients, e.g., of relative humidity, of temperature, of mechanical stresses, etc. The restoration operators are very much afraid of such changes.

Therefore, the interest in being capable to perform such a type of intervention with an air-setting mortar which is as chemically homogeneous with the already existing background or substrate as possible is evident.

Of course, the above case of frescoes is just one of many examples of interventions, all of which suffer from the fact that, in the absence of a direct contact with air, the setting of ordinary mortars is significantly hindered, in contrast to the setting of hydraulic limes.

On the other hand, even if there is a certain possibility of access by carbon dioxide to the intervention areas, if said access takes place slowly, it may happen that an air-setting mortar, injected into the space generated by the detachment and rendered adequately fluid for this application, easily undergoes dehydration through adsorption of water by the space bordering surfaces, or is subject to a probable separation of the inert fillers. Said slowness also may lead to a possible competitive reaction of the hydrated lime, which constitutes the binder of the mortar, with the substances contained in the adjacent regions before, owing to the slow diffusion of carbon dioxide into said free space, the desired carbonation process can take place.

Therefore, it is an object of the present invention to provide an air-setting (ordinary) mortar, i.e., a mortar whose setting requires the presence of carbon dioxide, which can react with the hydrated lime to an acceptable extent and within acceptable periods of time, which mortar is, at least partially, autonomously capable of proceeding through the various steps through which the setting reaction takes place, either in the substantial absence of contact with air and, therefore, with the atmospheric carbon dioxide which is the protagonist of the carbonation reaction, or under conditions of considerably difficult access of the necessary carbon dioxide (autogenously setting mortar).

Another object of the present invention is the provision of an air-setting mortar which is capable of an at least partially autogenous setting and ensures, in the alkaline environment generated by the hydrated lime, the slow formation of carbon dioxide, such as to allow a kinetic sequence to take place which is comparable to the one which can be obtained under contact with atmospheric air by adsorption of carbon dioxide; with particular reference to the mechanisms of nucleation and growth of $CaCO_3$ crystals, on which the texture of said crystals depends, which characterizes the setting of the mortar, thereby securing a structural homogeneity with the already present support.

A still further object is to provide an ordinary mortar with an at least partially autogenous setting, which is particularly suitable for use in the field of restoration of especially artistic works, and in particular in the field of restoration of frescoes and mural paintings in general.

According to the present invention, these and still further objects are achieved by air-setting mortars which undergo an at least partially autogenous setting by carbonation and comprise in their formulation, besides the conventional components of air-setting mortars, at least one solid or liquid compound which is hydrolysable in an alkaline medium and has the general formula (I)

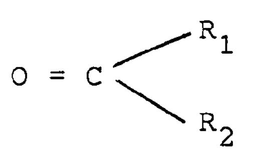

(I)

wherein:

$R_1$ and $R_2$, the same or different from each other, represent $-OR_3$, $-N(R_4)_2$ or $-SR_5$, $R_3$ and $R_5$, the same or different from each other, being selected from hydrogen, ammonium, alkali and alkaline-earth

metals, alkyl, aryl and acyl radicals; and $R_4$ representing hydrogen or an alkyl, aryl or acyl radical.

The above alkyl radicals preferably are lower alkyl radicals containing from 1 to 5 carbon atoms, methyl and ethyl groups being particularly preferred. The aryl radicals usually contain from 6 to 10 carbon atoms, the phenyl group being the preferred aryl group.

As regards the acyl groups, those which derive from alkanoic acids containing from 1 to 5 carbon atoms are preferred.

The preferred alkali and alkaline-earth metals are sodium, potassium, calcium and magnesium.

The compounds having the above formula (I), by hydrolysis under alkaline conditions, slowly release carbon dioxide, thus enabling the mortar to set in the absence of any gas exchange with the external environment.

According to a different definition, the compounds having the above formula (I) can be regarded as derivatives of carbonic acid:

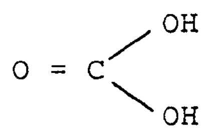

by means of the replacement of OH groups with $OR_3$, $N(R_4)_2$ and $SR_5$ radicals, wherein $R_3$, $R_4$ and $R_5$ have the meanings given above, and which are in a stable, liquid or solid form under ambient conditions.

Among the compounds falling within the scope of the above formula (I), the following may be mentioned in particular: carbamic acid and esters and salts thereof, ureas, urethanes, xanthogenic acid and its derivatives.

These are compounds which are decomposed by alkalis, giving rise to the formation of carbonic acid, ammonia, alcohols, etc. Ammonia and alcohol possibly generated by the alkaline hydrolysis disappear with time, without changing the cohesion of the mortar.

The above products do not interfere with suitable additives which are optionally added, e.g., a fluidifying agent in order to increase the fluidity of the mortar, and the like.

Ammonium carbamate and the ($C_1$-$C_5$)-alkyl-esters of carbamic acid such as ethyl carbamate or urethane, ethyl-N-methyl carbamate, ethyl-di-methyl carbamate and phenyl-di-methyl carbamate have proven to be particularly effective compounds.

Preferably, the compounds of formula (I) are added in amounts ranging from 1 to 10% by weight, based on the total weight of the mortar.

The compounds of general formula (I), useful for the purposes of the present invention, are per se known products and are available on the market or can be prepared according to the known techniques.

The mortars may be prepared by first preparing the conventional mixture containing, e.g., hydrated lime, inert materials such as sand, pumice, soil, clay, granular fossil meal, diatomaceous earth, etc. and water, and then by adding the compound(s) of formula (I) to said mixture in the final step of the mortar preparation, before said mortar is used.

The autogenously air-setting mortar containing hydrolysable compound(s) of the above formula (I) of the present invention is suitable not only for the binding and restoration of detached layer portions by injection of the mortar into the inner part of the areas of interest but also is suitable for the restoration of cracks or fissures on the fresco surfaces which are in contact with the atmosphere. In the latter case, a more rapid setting and carbonation of the restored parts is obtained, as requried in particular cases of restoration.

The following non-limitative examples are given in order to illustrate the present invention.

## EXAMPLE 1

Teh following components:

- Calcium hydroxide (hydrated lime) 50 parts by weight
- Fine sand 50 parts by weight

were placed in a mortar mixer.

A homogeneous mixture of the components with water was prepared, until a fluid mortar, ready for use, was obtained. At the end, 2.5 parts by weight of ethyl carbamate were added.

The mortar was then introduced into a cavity of 2 cm formed between a brick wall and a detached plaster, in order to cement said plaster to said wall. The setting and the complete hardening of said mortar took place within 4 days.

## EXAMPLE 2

Example 1 was repeated, with ethyl carbamate being replaced by the same amount of ethyl-N-methyl-carbamate.

The mortar was introduced into a cavity similar to the cavity of Example 1, and mortar setting and hardening was observed within 3 days.

## EXAMPLE 3

Example 1 was repeated, replacing ethyl carbamate with 5 parts by weight of ethyl-di-methyl-carbamate. The mortar set and hardened within about 3 days.

## EXAMPLE 4

Example 1 was repeated, using 5 parts by weight of phenyl-di-methyl carbamate instead of 2.5 parts of ethyl carbamate.

The setting and hardening of the mortar occurred within about 3 days.

## EXAMPLE 5

Example 1 was repeated, using 5 parts of ammonium carbamate instead of 2.5 parts of ethyl carbamate. The mortar set and hardened within about 2 days.

## EXAMPLE 6

The following components:

| | |
|---|---|
| - Calcium hydroxide | 50 parts by weight |
| - Fine sand | 50 parts by weight |
| - Fluidifying agent (based on calcium poly-naphthalene sulphonate (sold by Soc. MAC under the trade name DO015) | 2.5 parts by weight |

were placed into a mortar mixer.

A homogeneous mixture of the components with water was prepared until a very fluid mortar, ready for use, was obtained.

At the end, 2.5 parts by weight of ethyl carbamate were added.

The mortar was then introduced into a cavity of 2 cm formed between a brick wall and a detached plaster. The setting and complete hardening of the mortar took place within 4 days.

## Claims

1. Air-setting mortars capable of undergoing an at least partially autogenous setting by carbonation and containing hydrated lime as active component, furthermore containing at least one solid or liquid compound which is hydrolysable in an alkaline medium and has the general formula (I):

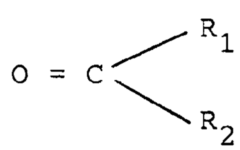

(I)

wherein $R_1$ and $R_2$, the same or different from each other, are:

- $OR_3$;
- $N(R_4)_2$; or
- $SR_5$;

$R_3$ and $R_5$, the same or different from each other, being selected from hydrogen, ammonium, alkali and alkaline-earth metals, alkyl, aryl and acyl radicals, and
$R_4$ representing hydrogen, alkyl, aryl or acyl radicals.

**2.** Mortars according to claim 1, wherein the alkyl groups contain from 1 to 5 carbon atoms.

**3.** Mortars according to anyone of claims 1 and 2, wherein the aryl groups contain from 6 to 10 carbon atoms and particularly are phenyl groups.

**4.** Mortars according to anyone of the preceding claims, wherein the acyl groups are derived from alkanoic acids containing from 1 to 5 carbon atoms.

**5.** Mortars according to anyone of the preceding claims, wherein the alkali and alkaline-earth metals are selected from sodium, potassium, calcium and magnesium.

**6.** Mortars according to anyone of the preceding claims, wherein the compounds of general formula (I) are selected from carbamic acid and its esters and salts, ureas, urethanes, xanthogenic acid and its derivatives, and mixtures thereof.

**7.** Mortars according to claim 6, wherein the compounds of general formula (I) are selected from ammonium carbamate, the ($C_1$-$C_5$)-alkyl esters of carbamic acid, and mixtures thereof.

**8.** Mortars according to claim 7, wherein the ($C_1$-$C_5$)-alkyl esters of carbamic acid are selected from ethyl carbamate, ethyl-N-methyl carbamate, ethyl-di-methyl carbamate, phenyl-di-methyl carbamate, and mixtures thereof.

**9.** Mortars according to anyone of the preceding claims, wherein the amount of compound(s) of general formula (I) ranges from 1 to 10% by weight, based on the total weight of the mortar.

**10.** Process for preparing the mortars according to anyone of the preceding claims, comprising the steps of mixing the hydrated lime, inert materials such as sand, pumice, soil, clay, granular fossil meal, diatomaceous meal, and other additives with water, and adding from 1 to 10% by weight of one or more compounds of general formula (I) to said mixture before the mortar is used.

**Patentansprüche**

**1.** An der Luft abbindende Mörtel, die mindestens teilweise autogen durch Carbonisierung abbinden können und gelöschten Kalk als aktive Komponente enthalten, die ferner mindestens eine feste oder flüssige Verbindungen enthalten, die in einem alkalischen Medium hydrolysierbar ist und die allgemeine Formel hat

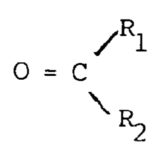

(I)

worin

$R_1$ und $R_2$, die gleich oder voneinander verschieden sein können, $-OR_3$, $-N(R_4)_2$ oder $-SR_5$ bedeuten, wobei $R_3$ und $R_5$, die gleich oder voneinander verschieden sein können, aus Wasserstoff, Ammonium, Alkali- und Erdalkalimetallen, Alkyl-, Aryl- und Acylresten ausgewählt werden und $R_4$ Wasserstoff, einen Alkyl-, Aryl- oder Acylrest bedeutet.

**2.** Mörtel nach Anspruch 1, worin die Alkylgruppen 1 bis 5 Kohlenstoffatome enthalten.

**3.** Mörtel nach irgendeinem der Ansprüche 1 und 2, worin die Arylgruppen 6 bis 10 Kohlenstoffatome enthalten und insbesondere Phenylgruppen sind.

4. Mörtel nach irgendeinem der vorhergehenden Ansprüche, worin die Acylgruppen von Alkansäuren mit 1 bis 5 Kohlenstoffatomen abgeleitet sind.

5. Mörtel nach irgendeinem der vorhergehenden Ansprüche, worin die Alkali- und Erdalkalimetalle aus Natrium, Kalium, Calcium und Magnesium ausgewählt sind.

6. Mörtel nach irgendeinem der vorhergehenden Ansprüche, worin die Verbindungen der allgemeinen Formel (I) aus Carbaminsäure und deren Estern und Salzen, Harnstoffen, Urethanen, Xanthogensäure und deren Derivaten und Mischungen derselben ausgewählt sind.

7. Mörtel nach Anspruch 6, worin die Verbindungen der allgemeinen Formel (I) aus Ammoniumcarbamat, den ($C_1$-$C_5$)-Alkylestern der Carbaminsäure und Mischungen derselben ausgewählt sind.

8. Mörtel nach Anspruch 7, worin die ($C_1$-$C_5$)-Alkylester der Carbaminsäure aus Ethylcarbamat, Ethyl-N-methylcarbamat. Ethyldimethylcarbamat, Phenyldimethylcarbamat und Mischungen derselben ausgewählt sind.

9. Mörtel nach irgendeinem der vorhergehenden Ansprüche, worin die Menge der Verbindung(en) der allgemeinen Formel (I) im Bereich von 1 bis 10 Gew.-%, bezogen auf das Gesamtgewicht des Mörtels, liegt.

10. Verfahren zur Herstellung der Mörtel nach irgendeinem der vorhergehenden Ansprüche, das die Schritte des Mischens von gelöschtem Kalk, inerter Materialien, wie Sand, Bimsstein, Erde, Ton, granularem Infusorienerdemehl, Diatomeenerdemehl, und anderen Zusätzen mit Wasser und die Zugabe von 1 bis 10 Gew.-% einer oder mehrerer Verbindungen der allgemeinen Formel (I) zu dieser Mischung umfaßt, bevor der Mörtel verwendet wird.

## Revendications

1. Mortiers durcissant à l'air, pouvant subir une prise au moins partiellement autogène par carbonatation et contenant de la chaux hydratée ou chaux grasse en tant que composant actif, et contenant en outre au moins un composé solide ou liquide qui est hydrolysable dans un milieu alcalin et présente la formule générale I :

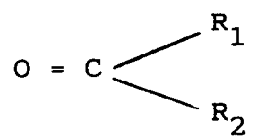

(I)

dans laquelle:

$R_1$ et $R_2$, qui sont identiques ou différents, représentent chacun: $-OR_3$; $-N(R_4)_2$; ou $-SR_5$; $R_3$ et $R_5$, identiques ou différents, étant chacun choisis parmi l'atome d'hydrogène, l'ammonium, les métaux alcalins et alcalino-terreux, les radicaux alkyles, aryles et acyles; et $R_4$ représente un atome d'hydrogène ou un radical alkyle, aryle ou acyle.

2. Mortiers selon la revendication 1, dans lesquels les groupes alkyles ont de 1 à 5 atomes de carbone.

3. Mortiers selon l'une quelconque des revendications 1 et 2, dans lesquels des groupes aryles ont de 6 à 10 atomes de carbone et représentent en particulier des groupes phényles.

4. Mortiers selon l'une quelconque des revendications précédentes, dans lesquels les groupes acyles dérivent d'acides alcanoïques ayant de 1 à 5 atomes de carbone.

5. Mortiers selon l'une quelconque des revendications précédentes, dans lesquels les métaux alcalins et alcalino-terreux sont choisis parmi le sodium, le potassium, le calcium et le magnésium.

6. Mortiers selon l'une quelconque des revendications précédentes, dans lesquels les composés de formule

générale (I) sont choisis parmi l'acide carbamique et ses esters et ses sels, les urées, les uréthannes, l'acide xanthogénique et ses dérivés, et leurs mélanges.

**7.** Mortiers selon la revendication 6, dans lesquels les composés de formule générale (I) sont choisis parmi le carbamate d'ammonium, les esters alkyliques en $C_1$-$C_5$ de l'acide carbamique, et leurs mélanges.

**8.** Mortiers selon la revendication 7, dans lesquels les esters alkyliques en $C_1$-$C_5$ de l'acide carbamique sont choisis parmi le carbamate d'éthyle, le N-méthylcarbamate d'éthyle, le diméthylcarbamate d'éthyle, le diméthylcarbamate de phényle et leurs mélanges.

**9.** Mortiers selon l'une quelconque des revendications précédentes, dans lesquels la quantité du ou des composés de formule générale (I) est comprise entre 1 et 10% en poids par rapport au poids total du mortier.

**10.** Procédé pour préparer les mortiers selon l'une quelconque des revendications précédentes, comprenant les étapes qui consistent à mélanger la chaux grasse, les matières inertes telles que le sable, la pierre ponce, du sol, de l'argile, de la poudre fossile granulaire, de la terre de diatomée, et d'autres additifs à de l'eau, et à ajouter de 1 à 10% en poids d'un ou plusieurs composés de formule générale (I) audit mélange avant d'utiliser le mortier.